# EUROPÄISCHE PATENTSCHRIFT

(11) **EP 3 186 193 B1**
(45) Veröffentlichungstag und Bekanntmachung des Hinweises auf die Patenterteilung: **03.04.2019**
(21) Anmeldenummer: 15725240.4
(22) Anmeldetag: 04.05.2015
(51) Int. Cl.: C02F 1/00

(54) **TRAGBARER NOTFALL-WASSERAUFBEREITUNGSKOFFER**
PORTABLE EMERGENCY WATER TREATMENT CARRYING CASE
VALISE DE SECOURS PORTABLE POUR LE TRAITEMENT D'EAU

(30) Priorität: 25.08.2014 DE 202014103960 U
(43) Veröffentlichungstag der Anmeldung: 05.07.2017
(73) Patentinhaber: Ujeta GmbH, 87757 Kirchheim (DE)
(72) Erfinder: FREISEISEN, Hubert, 82538 Geretsried (DE)
(74) Vertreter: Köster, Hajo
(86) Internationale Anmeldenummer: PCT/EP2015/059737
(87) Internationale Veröffentlichungsnummer: WO 2016/030028

(56) Entgegenhaltungen:
- EP-A1- 0 528 516
- WO-A2-2010/138462
- US-A- 5 130 015
- US-A1- 2014 061 108

## Beschreibung

Die Erfindung betrifft einen tragbaren Notfall-Wasseraufbereitungskoffer mit einem Wasserbehälter, der mit einem Wasserabfluss verbunden ist, mit mindestens einem Filter und mit einer Fördereinheit, die mit einer Pumpe, einem Wasserzulauf, einem Wasserauslauf und einer Leitung, welche den Wasserzulauf über die Pumpe fluiddicht mit dem Wasserauslauf verbindet, ausgestattet ist.

Wasseraufbereitungsgeräte zum Entfernen der verschiedensten Schadstoffe, beispielsweise Chlor, chlorierte Kohlenwasserstoffe, Pestizide, Herbizide, Insektizide und Schwermetalle sowie Nitrate sind seit langem bekannt. Derartige Geräte können die unterschiedlichsten Filter bzw. Filterkerzen aufweisen. In vielen Fällen wird dabei ein Aktivkohlefilter eingesetzt, der mit weiteren Filtern, beispielsweise Membranfiltern usw., kombiniert werden kann.

Ein derartiges Wasseraufbereitungsgerät ist beispielsweise in der EP0483738B1 beschrieben. Dieses bekannte Wasseraufbereitungsgerät besitzt ein Gehäuse mit einem unteren und einem oberen Gehäuseabschnitt, die voneinander lösbar sind. Im Gehäuseinneren sind eine erste, untere Kammer mit Aktivkohle und eine zweite, obere Kammer mit einem Anionenaustauschmaterial versehen.

Die EP0483738B1 verweist auch auf ein tragbares Wasserreinigungsgerät, das aus der US4826594 bekannt ist. Auf die Würdigung dieser US-Druckschrift in der EP-Druckschrift wird hiermit verwiesen.

Die Druckschriften WO2010/138462 und EP0528516 offenbaren ebenfalls tragbare Wasseraufbereitungsgeräte mit Filtern.

Von der Universität Kassel wurde ein tragbarer Membran-Wasserfilter zur humanitären Hilfe entwickelt, welcher die dezentrale Versorgung mit sauberem Wasser in Not- und Katastrophensituationen ermöglichen soll. Dieser bekannte Wasserfilter wird auch bezeichnet als "Portable Aqua Unit for Lifesaving" (PAUL). Weitere Einzelheiten bezüglich dieses bekannten Wasserfilters befinden sich auch in Wikipedia.

Zur Notwasserversorgung ist ferner ein sogenanntes "Notfall-Wasserversorgungs-Krisenfass Carbonit Evers" bekannt, das auf einem Edelstahlfass basiert, in das ein Filter integriert ist. Zusätzlich ist eine Handpumpe vorhanden. Auch dieses bekannte Gerät dient zum Einsatz in Entwicklungs-, Not- und Katastrophengebieten sowie auch für den privaten Bedarf; man vergleiche www.alvito-wasserfilter.com.

Allen diesen bekannten Filtern bzw. Geräten ist der Nachteil immanent, dass diese Geräte unhandlich sind, da z.B. der Wassertank integraler Bestandteil des Gerätes ist.

Aufgabe der vorliegenden Erfindung ist es, einen tragbaren Notfall-Wasseraufbereitungskoffer zur Verfügung zu stellen, der einfach zu transportieren und auf einfache Weise in einen Betriebszustand zu überführen ist.

Gelöst wird diese Aufgabe durch einen tragbaren Notfall-Wasseraufbereitungskoffer gemäß dem Anspruch 1.

Dieser Notfall-Wasseraufbereitungskoffer, der nachstehend auch nur als Notfallkoffer bezeichnet wird, ist mit einem Wasserbehälter versehen, der mit einem Wasserabfluss ausgestattet ist. Zudem ist der Notfallkoffer mit mindestens einem Filter und mit einer Fördereinheit ausgestattet. Die Fördereinheit besitzt eine Pumpe, einen Wasserzulauf, einen Wasserauslauf und eine Leitung, welche den Wasserzulauf über die Pumpe fluiddicht mit dem Wasserauslauf verbindet.

Dieser Notfallkoffer ist u.a. dadurch gekennzeichnet, dass der Wasserbehälter und die Fördereinheit separate Einheiten darstellen und einen Betriebszustand sowie einen Transportzustand einnehmen können. Mit anderen Worten, es handelt sich um separate Teile bzw. Elemente, die einzeln gehandhabt werden können.

Dieser Notfallkoffer zeichnet sich ferner dadurch aus, dass der Wasserbehälter und die Fördereinheit zur Herstellung des Betriebszustands derart miteinander zusammengesetzt werden können, dass der Wasserabfluss des Wasserbehälters fluiddicht mit dem Wasserzulauf der Fördereinheit verbunden ist und dass Wasser aus dem Inneren des Wasserbehälters über den Wasserzulauf in die Leitung der Fördereinheit fließen kann, und auch wieder voneinander getrennt werden können, sodass der Wasserabfluss des Wasserbehälters nicht mit dem Wasserzulauf der Fördereinheit verbunden ist. Die beiden Elemente, nämlich der Wasserbehälter und die Fördereinheit, können somit zur Herstellung des Betriebszustandes zusammengebaut werden. In diesem Betriebszustand kann Wasser aus dem Inneren des Wasserbehälters aus dessen Wasserabfluss über den Wasserzulauf der Fördereinheit in die Leitung der Fördereinheit fließen.

Der Wasserkoffer ist derart ausgestaltet, dass er zur Herstellung des Betriebszustandes und somit der fluiddichten Verbindung zwischen dem Wasserabfluss des Wasserbehälters und dem Wasserzulauf der Fördereinheit auf die Fördereinheit aufgesetzt wird. Dafür werden keine zusätzlichen Elemente bzw. Teile benötigt.

Durch Betätigen der Pumpe kann dann Wasser aus dem Inneren des Wasserbehälters durch eine oder mehrere Filtereinheit(en) bis zum Wasserauslauf oder bis zum Wasserablass gefördert werden.

Dieser Notfallkoffer ist des Weiteren dadurch gekennzeichnet, dass der Wasserbehälter und die Fördereinheit zur Herstellung des Transportzustandes derart miteinander vereinigt werden können, dass der Wasserbehälter und die Fördereinheit eine gemeinsam handhabbare Einheit bilden. Wasserbehälter und Fördereinheit bilden somit ein gemeinsam sowie zusammen handhabbares Ensemble.

Weiterhin zeichnet sich der Notfallkoffer dadurch aus, dass der mindestens eine Filter
ii) in der Fördereinheit im Verlauf der Leitung oder
ii) im Betriebszustand flussabwärts vom Wasserauslauf der Fördereinheit fluiddicht damit verbunden ist sowie flussabwärts einen Wasserablass besitzt und
im Transportzustand im Inneren des Wasserbehälters gelagert oder lagerbar ist.

Der mindestens eine Filter kann somit flussabwärts von dem Wasserzulauf der Fördereinheit vor der Pumpe oder nach der Pumpe vor dem Wasserauslauf der Fördereinheit angeordnet sein. Der mindestens eine Filter stellt bei dieser Ausführungsform ein Bestandteil der Fördereinheit dar.

Vorzugsweise ist der mindestens eine Filter im Betriebszustand flussabwärts vom Wasserauslauf der Fördereinheit fluiddicht mit diesem Wasserauslauf verbunden und ist im Transportzustand als separate Einheit im Inneren des Wasserbehälters angeordnet. Der Innenraum des Wasserbehälters kann somit als Transportraum für den mindestens einen Filter oder vorzugsweise für mehrere Filter, die nacheinander bzw. in Reihe geschaltet werden können, worauf nachstehend noch näher eingegangen wird, dienen.

Nach einer weiterhin bevorzugten Ausführungsform besitzt der Notfallkoffer neben dem mindestens einen Filter ein, zwei, drei oder mehr weitere Filter. Diese Filter können an denjenigen oben beschriebenen Orten angeordnet sein, an welchen der mindestens eine Filter ebenfalls angeordnet sein kann.

Vorzugsweise sind im Betriebszustand flussabwärts vom Wasserauslauf der Fördereinheit zwei, drei oder mehr Filter hintereinander angeordnet, die fluiddicht miteinander verbunden, jedoch voneinander trennbar sind, damit sie für den Transportzustand in den Wasserbehälter gebracht werden können.

Nach einer weiterhin bevorzugten Ausführungsform ist der Wasserabfluss des Wasserbehälters im von der Fördereinheit getrennten Zustand verschlossen oder verschließbar und wird beim Zusammensetzen des Wasserbehälters mit der Fördereinheit selbsttätig geöffnet.

Weiterhin bevorzugt besitzen die Seitenwände des Wasserbehälters einen freien Rand, der eine virtuelle Standfläche aufspannt sowie umgrenzt. Zudem ist eine Zwischenwand vorgesehen, die von der Standfläche beabstandet ist, das Innere des Wasserbehälters zu dieser Seite hin abschließt und mit dem Wasserabfluss ausgestattet ist. Ferner besitzt die Fördereinheit eine Bodenplatte, die in die Standfläche einsetzbar ist. Nach dem Einsetzen befindet sich der Notfallkoffer im Transportzustand. Die Bodenplatte schließt den Wasserbehälter ab, ist jedoch gewünschtenfalls wieder daraus entfernbar. Natürlich muss sichergestellt werden, dass die Bodenplatte in diesem eingesetzten Zustand verbleibt, wenn der Notfallkoffer bewegt wird.

Die Fördereinheit befindet sich bei dieser Ausführungsform in einem weiteren Innenraum des Wasserkoffers. Dieser Innenraum wird begrenzt von der Zwischenwand, den Seitenwänden und der virtuellen Standfläche bzw der Bodenplatte

Nach einer weiterhin bevorzugten Ausführungsform besitzt der Wasserbehälter die Form eines Parallelepipeds und insbesondere eines Quaders. Ein Parallelepiped besitzt üblicherweise drei Paare von zwei einander gegenüberliegenden Seitenflächen unterschiedlicher Größe. Es sind allerdings auch Spezialformen denkbar, beispielsweise im Falle eines Würfels, bei dem alle Seitenflächen die gleiche Größe besitzen. Die nachfolgenden Darlegungen gelten für diese Spezialformen in entsprechender Weise.

Nach einer bevorzugten Ausführungsform stellen die beiden kleinen Seitenflächen und die beiden großen Seitenflächen des Parallelepipeds die Seitenwände des Wasserbehälters dar, bzw. bilden diese. Eine weitere Seitenfläche des Parallelepipeds stellt die Standfläche dar. Diese Seitenfläche wird üblicherweise nicht durch eine Seitenwand gebildet, sondern durch die Ränder der angrenzenden anderen Seitenwände aufgespannt.

Die der Standfläche gegenüberliegende Seitenfläche des Parallelepipeds kann durch einen darin einpassbaren Deckel verschlossen werden. Bei dem Parallelepiped handelt es sich vorzugsweise um einen Quader.

Zudem ist ein Zwischenboden bzw. eine Zwischenwand vorgesehen, der bzw. die von der Standfläche beabstandet ist, das Innere des Wasserbehälters zu dieser Seite hin abschließt und mit dem Wasserabfluss ausgestattet ist.

Die Erfindung wird nachstehend anhand nicht maßstabsgetreuer und skizzenhafter Zeichnungen näher erläutert. Dabei zeigen
- Figur 1: eine Seitenansicht auf einen quaderförmigen Notfall-Wasseraufbereitungskoffer in Aufsicht auf eine große Seitenwand in Explosionsdarstellung von Wasserbehälter und Fördereinheit,
- Figur 2: eine der Figur 1 analoge Aufsicht in Richtung der mittleren Seitenwand,
- Figur 3: eine Schnittansicht der in den Figuren 1 und 2 unten gezeigten Fördereinheit mit aufgesetzten Filtern, und zwar von links her in der Figur 2 betrachtet,
- Figur 4: eine Schnittansicht des in den Figuren 1 und 2 gezeigten Notfall-Wasseraufbereitungskoffers im Transportzustand, in dem die Fördereinheit in den Wasserbehälter eingesetzt ist, von links her in der Figur 2 betrachtet,
- Figur 5: eine Aufsicht auf den Notfall-Wasseraufbereitungskoffer im Betriebszustand, in dem sowohl der Wasserbehälter als auch die Filter auf die Fördereinheit aufgesetzt sind,
- Figur 6: eine Schnittansicht des in der Figur 5 gezeigten Notfall-Wasseraufbereitungskoffers,
- Figur 7: eine Aufsicht von rechts her auf den in der Figur 5 gezeigten Notfall-Wasseraufbereitungskoffer im Betriebszustand,
- Figur 8: eine Aufsicht von oben auf den Notfall-Wasseraufbereitungskoffer im Betriebszustand,
- Figur 9: einen Querschnitt durch den in der Figur 8 gezeigten Notfall-Wasseraufbereitungskoffer im Betriebszustand und
- Figur 10: eine perspektivische Ansicht auf den in den Figuren 3, 5, 6 7 und 8 gezeigten endständigen weiteren Filter von unten her.

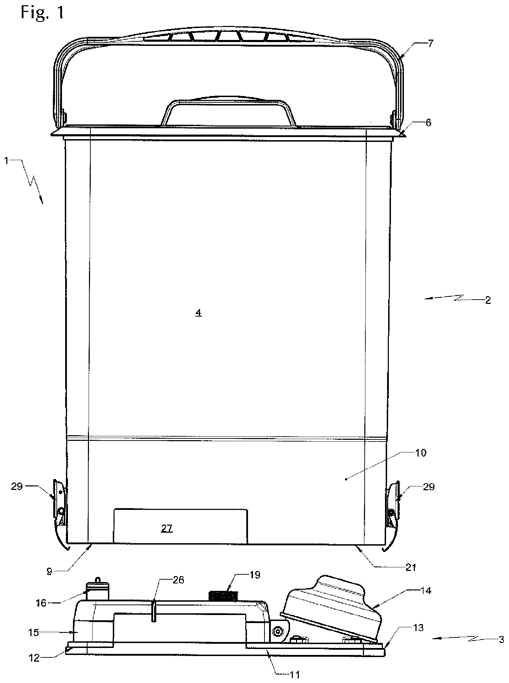

Der in der Figur 1 gezeigte Notfall-Wasseraufbereitungskoffer bzw. Notfallkoffer 1 besitzt einen Wasserbehälter 2 und eine Fördereinheit 3.

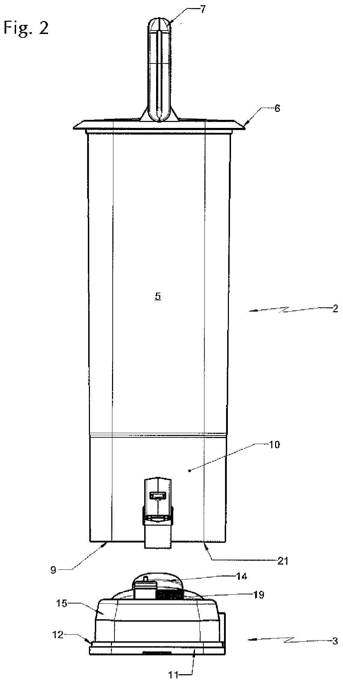

Der Wasserbehälter 2 ist quaderförmig ausgestaltet. Figur 1 zeigt die Aufsicht auf eine große Seitenwand 4 der Quaderform, während Figur 2 die Aufsicht auf eine kleine Seitenwand 5 zeigt.

Oben ist der Wasserbehälter 2 durch einen Deckel 6 verschließbar, der die obere Seitenwand des Quaders bildet. Dieser Deckel 6 ist abnehmbar. Zudem ist der Wasserbehälter 2 mit einem seitlich verschwenkbaren Griff 7 ausgestattet, der von einem Benutzer ergriffen werden kann, um den Notfallkoffer 1 zu transportieren.

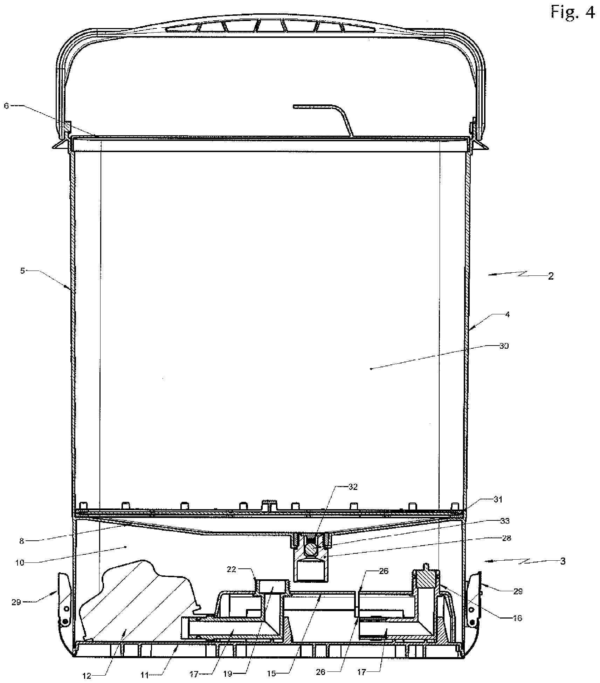

Im unteren Bereich ist der Wasserbehälter 2 durch eine Zwischenwand bzw. einen Zwischenboden 8 (man vergleiche auch Figur 4) nach unten hin abgeschlossen. Die Seitenwände 4 und 5 erstrecken sich über die Zwischenwand 8 nach unten hinaus.

Der untere freie Rand 9 der Seitenwände 4 und 5 spannt eine virtuelle Standfläche 21 auf, sodass der von den Seitenwänden 4,5 umgrenzte Raum von unten her bis zur Zwischenwand 8 offen ist. Dadurch wird ein Hohlraum 10 gebildet, der nach unten offen ist. In diesen Hohlraum 10 kann von unten her (die Angaben oben und unten beziehen sich auf den in den Figuren gezeigten Zustand) die Fördereinheit 3 eingesetzt werden.

Die Fördereinheit 3 besitzt eine Bodenplatte 11, die in etwa flächenkongruent zu der von dem freien Rand 9 aufgespannten virtuellen Standfläche 21 ist. Die Bodenplatte 11 ist jedoch geringfügig größer als diese virtuelle Standfläche 21. Der Rand der Bodenplatte 11 ist von unten her betrachtet nach innen eingerückt und bildet einen umlaufenden Absatz, auf dem die Seitenwände 4 und 5 mit ihrem freien Rand 9 im zusammengebauten Zustand und somit im Transportzustand aufliegen. Der obere Bereich der Bodenplatte 11 bildet eine Tragplatte 12, die jedoch geringfügig kleiner ist als die Bodenplatte 11, sodass der freie Rand 9 der Seitenwände 4,5 auf dem überstehenden, durch den Absatz gebildeten Randstreifen 13 aufliegen kann.

Auf der Tragplatte 12 ist eine Fußpumpe 14 befestigt. Zudem ist auch ein Aufsatz 15 auf der Tragplatte 12 befestigt, der im oberen Bereich mit einem Wasserzulauf 16 ausgestattet ist. Dieser Wasserzulauf 16 ist patrixartig ausgestaltet und wird von einem matrixartigen bzw. muffenartigen Wasserabfluss 28, der am Wasserbehälter 2 angeordnet und nachstehend näher beschrieben ist, aufgenommen. Dadurch wird eine fluiddichte Kupplung zwischen Fördereinheit 3 und Wasserbehälter 2 gewährleistet.

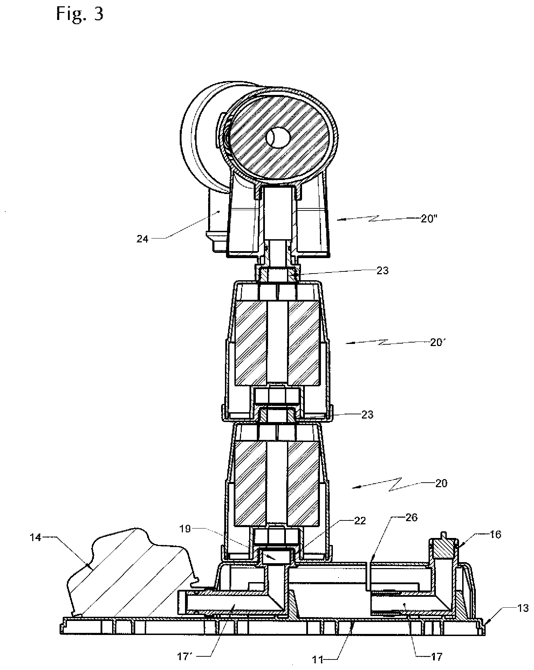

Vom Wasserzulauf 16 führt eine Leitung 17 zur Fußpumpe 14, von der dann die Leitung 17' zu einem Wasserauslauf 19 weiterführt, der ebenso wie der Wasserzulauf 16 im oberen Bereich des Aufsatzes 15 ausgestaltet ist. Dieser Wasserauslauf 19 besitzt einen mit einem Außengewinde versehenen Stutzen 22, auf den ein Filter 20 aufgesetzt ist. Dieser Filter 20 stellt eine Filterkartusche dar, die eine matrixartige Aufnahme bzw. Muffe mit einem Innengewinde besitzt, in welches der Wasserauslauf 19 eingeschraubt werden kann. In der Figur 3 ist der Filter 20 in der aufgeschraubten Position gezeigt.

Dieser Filter 20 stellt den mindestens einen Filter dar und besitzt oben einen Stutzen 23, der mit einem Außengewinde versehen ist. Auf diesen Stutzen 23 ist ein weiterer zweiter Filter 20' aufgeschraubt, der ebenso wie der Filter 20 ausgestaltet ist.

Die beiden Filter 20 und 20' sind fluiddicht miteinander verbunden und stellen Filterkartuschen dar, die mit unterschiedlichen Materialien befüllt sind, um den verschiedenen Filteranforderungen gerecht zu werden. Diese Materialien werden je nach Bedarf bzw. Erfordernis gewählt. Sofern gewünscht oder erforderlich können weitere derartige Filter bzw Filterkartuschen in Reihe geschaltet und somit mit den gezeigten Filtern fluiddicht verbunden werden.

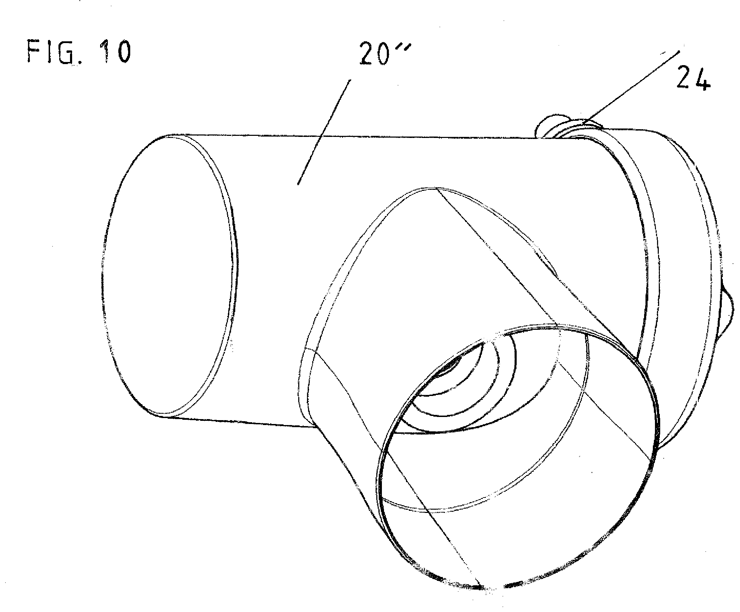

Auf den zweiten Filter 20' ist ein endständiger weiterer Filter 20" unter Herstellung einer fluiddichten Kupplung aufgeschraubt. Dieser endständige Filter 20" ist in der Figur 10 in perspektivischer Ansicht gezeigt und ist bekannt. Weitere Einzelheiten dieses endständigen Filters 20" sind beschrieben u.a. in der EP1875119B1 und der WO2010/112053 (PCT/EP2009/005577), auf deren Offenbarung hiermit verwiesen wird. Dieser endständige Filter 20" enthält üblicherweise mehrere unterschiedliche Teilfilter. Auch diesbezüglich wird auf die genannten Druckschriften verwiesen.

Flussabwärts weist der endständige Filter 20" einen Wasserablass 24 auf, der drehbar ist.

Die nach dem Wasserauslauf 19 angeordneten Filter 20,20',20" können vom Aufsatz 15 abgetrennt bzw. abgeschraubt werden. Zudem können die einzelnen Filter 20,20',20" voneinander getrennt werden und im Transportzustand im Inneren des Wasserbehälters 2 aufbewahrt sowie gewünschtenfalls gehaltert werden.

Im Transportzustand ist somit die Fördereinheit 3 unten in den Wasserbehälter (genauer in den Hohlraum 10) eingesetzt. Die Bodenplatte 11 bildet den unteren Abschluss dieses Ensembles bzw. dieser Einheit. Der obere Abschluss wird durch die Zwischenwand 8 gebildet. Diese Situation ist in der Figur 4 gezeigt.

Die Filter 20,20',20" (in der Figur 4 nicht gezeigt) befinden sich im Inneren bzw. im weiteren Hohlraum 30 des Wasserbehälters 2 oberhalb der Zwischenwand 8 in einem weiteren Hohlraum 30, der durch die Seitenwände 4,5 zusammen mit der Zwischenwand 8 und dem, den oberen Abschluss bildenden Deckel 6 umgrenzt wird.

Oberhalb der Zwischenwand 8 ist ein Kunststoffgitter 31 angeordnet, das die durch die Seitenwände 4 und 5 aufgespannte Fläche abdeckt, so dass im Wasserbehälter (genauer: im weiteren Hohlraum 30) befindliches Wasser durch dieses Kunststoffgitter fließen muss, um zum Wasserabfluss gelangen zu können. Auf diese Weise werden grobe Verunreinigungen, beispielsweise Steinchen, zurückgehalten.

Das Kunststoffgitter 31 besitzt zwei Gitterlagen, zwischen denen ein Flies als Zwischenlage eingelegt ist.

Der Zwischenboden 8 ist leicht derart abgesenkt (in der Figur 4 nach unten), dass der Wasserabfluss 28 den tiefsten bzw. untersten Bereich des Zwischenboden 8 bildet.

Im Wasserabfluss 28 befindet sich ein Rückschlagventil, das eine durch eine Feder 32 beaufschlagte Kugel 33 besitzt, welche durch diese Feder 32 nach unten gegen einen Ventilsitz drückt und somit den Wasserabfluss 28 verschließt und den Hohlraum 30 nach außen abdichtet.

Um den Notfallkoffer 1 in den Betriebszustand zu versetzen, wird der Wasserbehälter 2 von der Fördereinheit 3 abgehoben; diese Zustände sind in den Figuren 1 und 2 gezeigt.

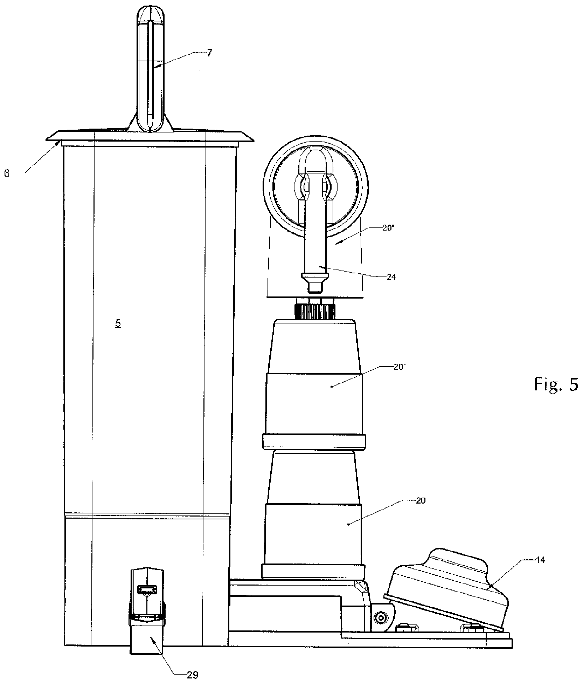

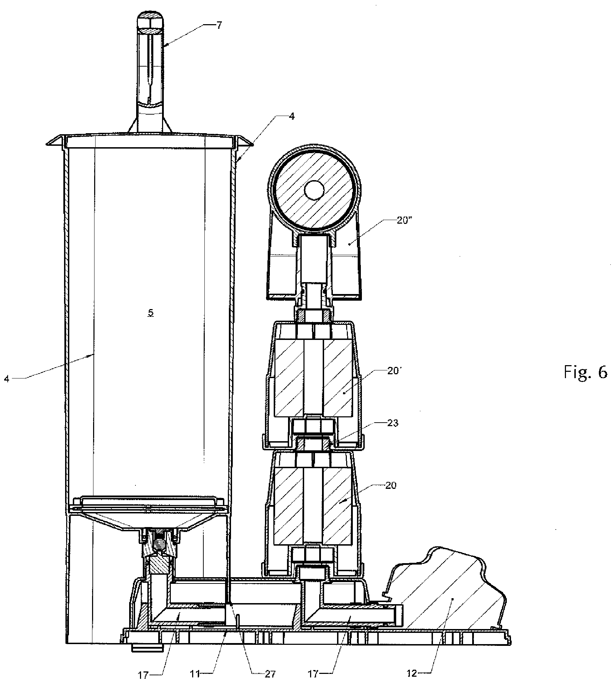

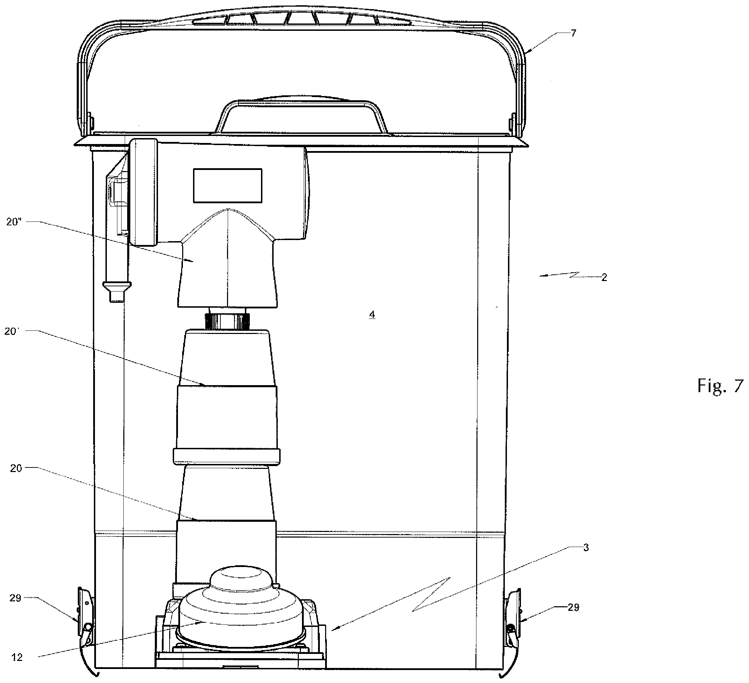

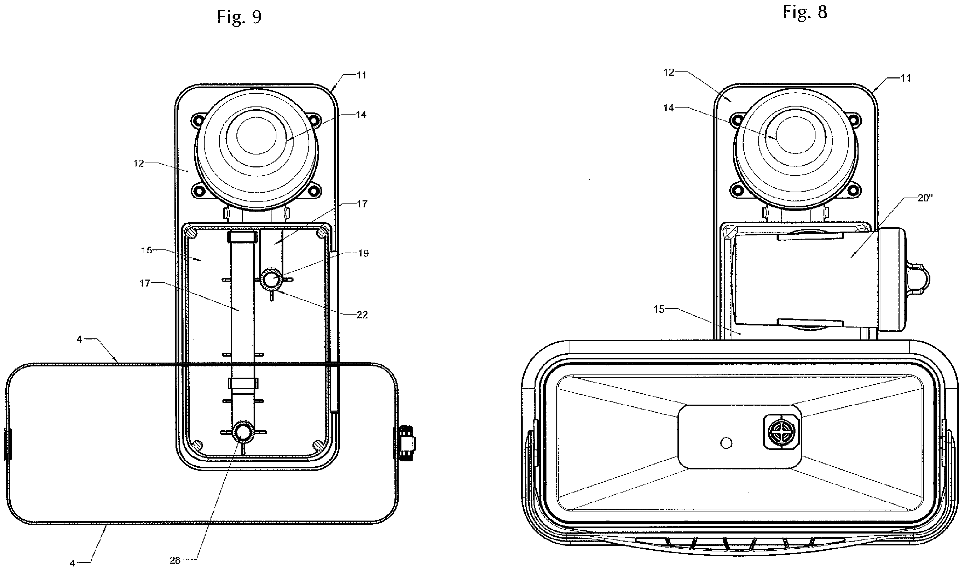

Danach wird der Wasserbehälter 2 um 90° um seine senkrechte Achse gedreht und wieder auf die Fördereinheit aufgesetzt. Dieser Zustand ist in den Figuren 3 sowie 5 bis 9 gezeigt. Dazu ist die Fördereinheit 3 mit einem Schlitz 26 versehen, in dem eine der großen Seitenwände 4 im Betriebszustand zu liegen kommt.

Dieser Schlitz 26 erstreckt sich beginnend oben am Aufsatz 15 senkrecht nach unten, reicht jedoch nicht bis zur Tragplatte 12 herunter.

In einer der großen Seitenwände 4 ist im Bereich des freien Randes 9 eine Aussparung 27 vorhanden, deren horizontale Breite in etwa der Breite der Tragplatte 12 entspricht. Die Tragplatte 12 besitzt aufgrund der Quaderform des Notfallkoffers 1 eine rechteckige Form bzw. besitzt eine rechteckige Fläche. Die Breite der Aussparung 27 entspricht dabei in etwa der kurzen Kante dieses Rechtecks.

Die Höhe der Aussparung 27 entspricht in etwa dem Abstand des unteren Endes des Schlitzes 26 bis zur unteren Fläche der Tragplatte 12. Die Aussparung 27 besitzt somit die Form eines Rechtecks.

Im Betriebszustand befindet sich somit die oberhalb der Aussparung 27 angeordnete Seitenwand 4 in dem Schlitz 26 und füllt diesen in etwa aus.

Aufgrund der Aussparung 27 kann die Seitenwand 4 in dem Bereich links und rechts von der Aussparung 27 jedoch bis zur Auflagefläche bzw. bis zur unteren Fläche bzw. Ebene der Bodenplatte 11 reichen. Somit liegen Bodenplatte 11 und der freie Rand der großen Seitenwände 4 und auch der kleinen Seitenwände 5 auf einer ebenen Auflagefläche auf.

Die andere große Seitenwand 4 des Wasserbehälters 2 befindet sich im Übrigen im Betriebszustand "außerhalb der Fördereinheit 3" und somit in der Figur 3 rechts von der Fördereinheit 3. Mit anderen Worten, die große Seitenwand 4, welche derjenigen mit der Aussparung 27 gegenüberliegt, reicht bis auf die Auflagefläche hinab.

In der Zwischenwand 8 befindet sich im Inneren des Wasserbehälters 2 ein Wasserabfluss 28, der in den Figuren nur angedeutet und nicht näher dargestellt ist. Bei diesem Wasserabfluss 28 handelt es sich bei der näher erläuterten Ausführungsform um eine nicht gezeigte Muffe, in welche der Wasserzulauf 16 unter Herstellung einer fluiddichten Verbindung eingesetzt bzw. eingeschoben werden kann. Im Betriebszustand ist somit das Innere des Wasserbehälters 2 über den Wasserablass 28, den Wasserzulauf 16, die Leitung 17 mit dem Wasserauslauf 19 und den sich daran anschließenden Filtern 20,20',20" fluidmäßig verbunden.

Der Wasserablass 26 erstreckt sich über die Zwischenwand 8 nach unten hinaus in den Hohlraum 10.

Der Wasserzulauf 16 der Fördereinheit 3 liegt oberhalb des Aufsatzes 15 und ist derart angebracht und ausgestaltet, dass der Wasserauslauf beim Zusammensetzen von Fördereinheit 3 und Wasserbehälter 2 zur Herstellung des Betriebszustandes in den Wasserauslauf 28 hineingeschoben wird und die Kugel 33 gegen die Kraft der Feder 32 des Rückschlagventils im Wasserzulauf 16 noch oben drückt und dadurch den Wasserfluss freigibt. Gleichzeitig wird eine fluiddichte Verbindung hergestellt.

Wenn im Rahmen der vorliegenden Unterlagen die Angaben "oben, unten, links, recht, senkrecht und horizontal" verwendet werden, beziehen sich diese Angaben, sofern nichts anderes angegeben ist, auf die in den Figuren gezeigten Situationen.

Den Notfallkoffer kann man in der Art und Weise verwenden, dass Fördereinheit 3 und Wasserbehälter 2 zusammengesetzt werden und auch die gewünschten Filter 20,20',20" in die gewünschte Position gebracht werden. Dann wird Wasser in den Wasserbehälter 2 eingefüllt und die Pumpe 14 betätigt. Schlussendlich kann dann sauberes Wasser am Wasserablass 24 erhalten werden.

Zweckmäßigerweise wird der Wasserbehälter 2 jedoch dazu verwendet, Wasser an einer geeigneten Stelle zu schöpfen und zur Fördereinheit 3 bzw. zum gewünschten Filterort zu transportieren. Der mit Wasser gefüllte Wasserbehälter 2 wird dann auf die Fördereinheit 3 aufgesetzt. Das Wasser kann vor Ort gefiltert werden. Ein Transport der Filtereinheit zum Entnahmeort für das Wasser ist nicht erforderlich. Je nach Anforderungsprofil an die Filtereigenschaft können unterschiedliche Filter mit unterschiedlichen Filtermaterialien zur Anwendung kommen.

Um den Notfallkoffer vom Betriebszustand in den Transportzustand zurück zu überführen, werden die Filter 20, 20' und 20" abgeschraubt und der Wasserbehälter 2 von der Fördereinheit hoch bewegt, um 90° um eine senkrechte Achse gedreht und wieder auf die Fördereinheit derart aufgesetzt, dass der in der Figur 4 dargestellte Zustand wieder erreicht wird. Der Wasserbehälter 2 wird dann mit der Fördereinheit 3 mit Hilfe von Bügelverschlüssen 29, die an den kleinen Seitenwänden 5 des Wasserkoffers angebracht sind und mit ihrem Bügel den Rand der Bodenplatte 11 hintergreifen, fest miteinander verbunden.

Statt der Fußpumpe 14 kann eine Handpumpe oder auch eine elektrische Pumpe eingebaut werden. In letzterem Fall wird der Notfallkoffer 1 mit einer Batterie oder einem Akku ausgestattet, der z.B. von einer auf der Seitenfläche angebrachten Solarzelle aufgeladen wird.

### BEZUGSZEICHENLISTE

- 1: Notfallwasseraufbereitungskoffer bzw. Notfallkoffer
- 2: Wasserbehälter
- 3: Fördereinheit
- 4: große Seitenwand
- 5: kleine Seitenwand
- 6: Deckel
- 7: flexibler Gurt
- 8: Zwischenwand bzw. -boden
- 9: freier Rand
- 10: Hohlraum
- 11: Bodenplatte
- 12: Tragplatte
- 13: Randstreifen
- 14: Fußpumpe
- 15: Aufsatz
- 16: Wasserzulauf
- 17,17': Leitung
- 18: weitere Leitung
- 19: Wasserauslauf
- 20: Filter
- 20': weitere Filter
- 20": endständiger Filter
- 21: Standfläche
- 22: Stutzen
- 23: Stutzen
- 24: Wasserablass
- 25: Absatz
- 26: Schlitz
- 27: Aussparung
- 28: Wasserabfluss des Wasserbehälters
- 29: Bügelverschluss
- 30: weiterer Hohlraum
- 31: Kunststoffgitter
- 32: Feder
- 33: Kugel

## Patentansprüche

1. Tragbarer Notfall-Wasseraufbereitungskoffer (1) mit einem Wasserbehälter (2), der einen Wasserabfluss (28) aufweist, mit mindestens einem Filter (20,20',20") und mit einer Fördereinheit (3), die mit einer Pumpe (14), einem Wasserzulauf (16), einem Wasserauslauf (19) und einer Leitung (17), welche den Wasserzulauf (16) über die Pumpe (14) fluiddicht mit dem Wasserauslauf (19) verbindet, ausgestattet ist, und mit folgenden Merkmalen:
i) der Wasserbehälter (2) und die Fördereinheit (3) stellen separate Einheiten dar und sind geeignet, einen Betriebszustand sowie einen Transportzustand einzunehmen,
ii) der Wasserbehälter (2) und die Fördereinheit (3) sind geeignet, zur Herstellung des Betriebszustandes derart miteinander zusammengesetzt zu werden, dass der Wasserabfluss (28) des Wasserbehälters (2) fluiddicht mit dem Wasserzulauf (16) der Fördereinheit (3) verbunden ist und dass Wasser aus dem Inneren des Wasserbehälters (2) über den Wasserzulauf (16) in die Leitung (17) der Fördereinheit (3) fließt,
und sind auch dazu geeignet, wieder voneinander getrennt zu werden, so dass der Wasserabfluss (28) des Wasserbehälters (2) nicht mit dem Wasserzulauf (16) der Fördereinheit (3) verbunden ist,
iii) der Wasserbehälter (2) und die Fördereinheit (3) sind geeignet, zur Herstellung des Transportzustandes derart miteinander vereinigt zu werden, dass der Wasserbehälter (2) und die Fördereinheit (3) eine gemeinsam handhabbare Einheit bilden, und
iv) der mindestens eine Filter (20,20',20") ist im Betriebszustand flussabwärts vom Wasserauslauf (19) der Fördereinheit (3) fluiddicht damit verbunden und besitzt flussabwärts einen Wasserablass (24), **dadurch gekennzeichnet,**
**dass** der Wasserbehälter (2) derart ausgestaltet ist, dass er zur Herstellung des Betriebszustandes und somit der fluiddichten Verbindung zwischen dem Wasserabfluss (28) des Wasserbehälters (2) und dem Wasserzulauf (16) der Fördereinheit (3) auf die Fördereinheit (3) aufgesetzt wird, und
**dass** der mindestens eine Filter (20,20',20") im Transportzustand als separate Einheit im Inneren des Wasserbehälters (2) gelagert oder lagerbar ist.

2. Notfall-Wasseraufbereitungskoffer nach Anspruch 1,
**dadurch gekennzeichnet, dass**
neben dem mindestens einen Filter (20) ein, zwei oder mehr weitere Filter (20',20") vorhanden sind, die im Betriebszustand flussabwärts vom Wasserauslauf (19) hintereinander angeordnet sind und die Filter (20,20',20") fluiddicht miteinander verbunden sind, jedoch voneinander trennbar sind.

3. Notfall-Wasseraufbereitungskoffer nach Anspruch 2,
**dadurch gekennzeichnet, dass**
die voneinander getrennten Filter (20,20',20") im Transportzustand im Inneren des Wasserbehälters (2) angeordnet sind bzw. angeordnet werden können.

4. Notfall-Wasseraufbereitungskoffer nach einem der vorhergehenden Ansprüche,
**dadurch gekennzeichnet, dass**
der Wasserabfluss (28) des Wasserbehälters (2) im von der Fördereinheit (3) getrennten Zustand verschlossen oder verschließbar ist und beim Zusammensetzen des Wasserbehälters (2) mit der Fördereinheit (3) selbsttätig geöffnet wird.

5. Notfall-Wasseraufbereitungskoffer nach einem der vorhergehenden Ansprüche,
**dadurch gekennzeichnet, dass**
die Seitenwände (4,5) des Wasserbehälters (2) einen freien unteren Rand (9) besitzen, der einen nach unten offenen Hohlraum (10) umgrenzt,
eine Zwischenwand (8) vorgesehen ist, die das Innere des Wasserbehälters (2) zu diesem Hohlraum (10) hin abschließt und mit dem Wasserabfluss (28) ausgestattet ist und
die Fördereinheit (3) eine Bodenplatte (11) besitzt, die in den Hohlraum (10) einsetzbar und in diesem Transportzustand den Wasserbehälter (2) abschließt, jedoch wieder daraus entfernbar ist.

6. Notfall-Wasseraufbereitungskoffer nach einem der vorhergehenden Ansprüche,
**dadurch gekennzeichnet, dass**
der Wasserbehälter (2) die Form eines Quaders besitzt.

7. Notfall-Wasseraufbereitungskoffer nach einem der vorhergehenden Ansprüche
**dadurch gekennzeichnet, dass**
ein lösbarer Verschluss (29) vorgesehen ist, der dazu geeignet ist, im Transportzustand den Wasserbehälter (2) mit der Fördereinheit (3) unter Ausbildung einer gemeinsam handhabbaren Einheit zu verbinden.

## Claims

1. Portable emergency water treatment case (1) having a water container (2) which has a water outflow (28), having at least one filter (20, 20', 20") and having a conveying unit (3) which is equipped with a pump (14), with a water inlet (16), with a water outlet (19) and with a line (17) which connects the water inlet (16) to the water outlet (19) via the pump (14) in a fluid-tight manner, and having the following features:
i) the water container (2) and the conveying unit (3) constitute separate units and are suitable for assuming an operating state and a transport state,
ii) the water container (2) and the conveying unit (3) are suitable, for establishing the operating state, for being assembled with one another such that the water outflow (28) of the water container (2) is connected to the water inlet (16) of the conveying unit (3) in a fluid-tight manner, and that water flows from the interior of the water container (2) into the line (17) of the conveying unit (3) via the water inlet (16),
and are also suitable for being separated from one another again so that the water outflow (28) of the water container (2) is not connected to the water inlet (16) of the conveying unit (3),
iii) the water container (2) and the conveying unit (3) are suitable, for establishing the transport state, for being combined with one another such that the water container (2) and the conveying unit (3) form a unit which is able to be handled jointly, and
iv) in the operating state, the at least one filter (20, 20', 20") is connected downstream of the water outlet (19) of the conveying unit (3) in a fluid-tight manner thereto and has a water discharge (24) downstream,
**characterized in that**
the water container (2) is designed such that, for establishing the operating state and thus the fluid-tight connection between the water outflow (28) of the water container (2) and the water inlet (16) of the conveying unit (3), it is placed onto the conveying unit (3), and
**in that**, in the transport state, the at least one filter (20, 20', 20") is mounted or is able to be mounted as a separate unit in the interior of the water container (2).

2. Emergency water treatment case according to Claim 1,
**characterized in that**,
in addition to the at least one filter (20), one, two or more further filters (20', 20") are present, which, in the operating state, are arranged one behind the other downstream of the water outlet (19), and the filters (20, 20', 20") are connected to one another in a fluid-tight manner, these however being able to be separated from one another.

3. Emergency water treatment case according to Claim 2,
**characterized in that**,
in the transport state, the filters (20, 20', 20"), which are separated from one another, are arranged or are able to be arranged in the interior of the water container (2).

4. Emergency water treatment case according to one of the preceding claims,
**characterized in that**,
in the state of separation from the conveying unit (3), the water outflow (28) of the water container (2) is closed off or is able to be closed off, and is automatically opened upon assembly of the water container (2) with the conveying unit (3).

5. Emergency water treatment case according to one of the preceding claims,
**characterized in that**
the side walls (4, 5) of the water container (2) have a free lower edge (9) which borders a downwardly open hollow space (10), there is provided an intermediate wall (8) which terminates the interior of the water container (2) towards this hollow space (10) and which is provided with the water outflow (28), and the conveying unit (3) has a bottom plate (11) which is able to be inserted into the hollow space (10) and, in this transport state, terminates the water container (2), said plate however being able to be removed again therefrom.

6. Emergency water treatment case according to one of the preceding claims,
**characterized in that**
the water container (2) has the shape of a cuboid.

7. Emergency water treatment case according to one of the preceding claims,
**characterized in that**
a releasable closure (29) is provided, which is suitable, in the transport state, for connecting the water container (2) to the conveying unit (3) so as to form a unit which is able to be handled jointly.

## Revendications

1. Valise de secours portable pour le traitement de l'eau (1) avec un réservoir d'eau (2), qui présente un échappement d'eau (28), avec au moins un filtre (20, 20', 20") et avec une unité de circulation (3), qui est équipée d'une pompe (14), d'une arrivée d'eau (16), d'une sortie d'eau (19) et d'une conduite (17), qui relie de façon étanche au fluide l'arrivée d'eau (16) à la sortie d'eau (19) par l'intermédiaire de la pompe (14), et présentant les caractéristiques suivantes:
i) le réservoir d'eau (2) et l'unité de circulation (3) représentent des unités séparées et sont aptes à occuper un état de fonctionnement ainsi qu'un état de transport,
ii) le réservoir d'eau (2) et l'unité de transport (3) sont aptes à être assemblés l'un à l'autre pour la réalisation de l'état de fonctionnement, de telle manière que l'échappement d'eau (28) du réservoir d'eau (2) soit raccordé de façon étanche au fluide à l'arrivée d'eau (16) de l'unité de circulation (3) et que de l'eau s'écoule de l'intérieur du réservoir d'eau (2) par l'arrivée d'eau (16) dans la conduite (17) de l'unité de circulation (3), et sont également aptes à être de nouveau séparés l'un de l'autre, de telle manière que l'échappement d'eau (28) du réservoir d'eau (2) ne soit pas raccordé à l'arrivée d'eau (16) de l'unité de circulation (3),
iii) le réservoir d'eau (2) et l'unité de circulation (3) sont aptes à être réunis l'un à l'autre pour la réalisation de l'état de transport, de telle manière que le réservoir d'eau (2) et l'unité de circulation (3) forment une unité manipulable commune, et
iv) ledit au moins un filtre (20, 20', 20") est dans l'état de fonctionnement raccordé de façon étanche au fluide à la sortie d'eau (19) de l'unité de circulation (3) en aval de celle-ci et comporte en aval une évacuation d'eau (24),
**caractérisée en ce que** le réservoir d'eau (2) est configuré de telle manière qu'il soit posé, pour la réalisation de l'état de fonctionnement et dès lors du raccordement étanche au fluide entre l'échappement d'eau (28) du réservoir d'eau (2) et l'arrivée d'eau (16) de l'unité de circulation (3), sur l'unité de circulation (3), et **en ce que** ledit au moins un filtre (20, 20', 20") dans l'état de transport est ou peut être supporté sous la forme d'une unité séparée à l'intérieur du réservoir d'eau (2).

2. Valise de secours pour le traitement d'eau selon la revendication 1, **caractérisée en ce qu'**en plus dudit au moins un filtre (20), il se trouve un, deux ou plusieurs autres filtres (20', 20") qui dans l'état de fonctionnement sont disposés l'un derrière l'autre en aval de la sortie d'eau (19) et les filtres (20, 20', 20") sont raccordés l'un à l'autre de façon étanche au fluide, mais sont séparables l'un de l'autre.

3. Valise de secours pour le traitement d'eau selon la revendication 2, **caractérisée en ce que** les filtres (20, 20', 20") séparés l'un de l'autre dans l'état de transport sont ou peuvent être disposés à l'intérieur du réservoir d'eau (2).

4. Valise de secours pour le traitement d'eau selon l'une quelconque des revendications précédentes, **caractérisée en ce que** l'échappement d'eau (28) du réservoir d'eau (2) est ou peut être fermé dans l'état séparé de l'unité de circulation (3) et est automatiquement ouvert lors de l'assemblage du réservoir d'eau (2) à l'unité de circulation (3).

5. Valise de secours pour le traitement d'eau selon l'une quelconque des revendications précédentes, **caractérisée en ce que** les parois latérales (4, 5) du réservoir d'eau (2) comportent un bord inférieur libre (9), qui entoure une chambre creuse (10) ouverte vers le bas, il est prévu une paroi intermédiaire (8) qui ferme l'intérieur du réservoir d'eau (2) vers cette chambre creuse (10) et qui est équipée de l'échappement d'eau (28), et l'unité de circulation (3) comporte une plaque de fond (11), qui peut être introduite dans la chambre creuse (10) et qui ferme le réservoir d'eau (2) dans cet état de transport, mais qui peut en être de nouveau séparée.

6. Valise de secours pour le traitement d'eau selon l'une quelconque des revendications précédentes, **caractérisée en ce que** le réservoir d'eau (2) a la forme d'un parallélépipède.

7. Valise de secours pour le traitement d'eau selon l'une quelconque des revendications précédentes, **caractérisée en ce qu'**il est prévu un verrou libérable (29), qui est apte à assembler dans l'état de transport le réservoir d'eau (2) à l'unité de circulation (3) en formant une unité manipulable commune.
